# EUROPÄISCHE PATENTSCHRIFT

(11) **EP 1 175 955 B1**
(45) Veröffentlichungstag und Bekanntmachung des Hinweises auf die Patenterteilung: **27.08.2008**
(21) Anmeldenummer: 01115266.7
(22) Anmeldetag: 23.06.2001
(51) Int. Cl.: B23K 37/08, B23K 26/00, B23K 26/24, B23K 26/06, B23K 26/42

(54) **Verfahren und Vorrichtung zu Schweissnahtglättung beim Strahlschweissen**
Process and device for smoothing a weld seam by beam welding
Procédé et dispositif de lissage de cordon soudé au cours du soudage par faisceau

(30) Priorität: 27.07.2000 DE 10037109
(43) Veröffentlichungstag der Anmeldung: 30.01.2002
(73) Patentinhaber: Hydro Aluminium Deutschland GmbH, 51149 Köln (DE)
(72) Erfinder: Maier, Christof, Dr., 50733 Köln (DE); Steimmel, Franz, 53619 Rheinbreitbach (DE)
(74) Vertreter: Cohausz & Florack

(56) Entgegenhaltungen:
- EP-A- 1 057 577
- WO-A-99/06173
- US-A- 3 437 787
- US-A- 4 914 268
- US-A- 5 689 327
- US-A- 5 705 788
- PATENT ABSTRACTS OF JAPAN vol. 003, no. 091 (C-054), 3. August 1979 (1979-08-03) & JP 54 071059 A (TOSHIBA CORP), 7. Juni 1979 (1979-06-07)

## Beschreibung

Die Erfindung betrifft ein Verfahren bzw. eine Vorrichtung zur Schweißnahtglättung beim Strahlschweißen bei welchem eine Schweißnaht zwischen zwei Metallbauteilen zumindest mit Hilfe eines Schweißstrahls im Tiefschweißmodus hergestellt wird.

Das Strahlschweißen gewinnt in zunehmendem Maße höhere Bedeutung bei der Verbindung von Metallbauteilen über eine Schweißnaht. Unter Strahlschweißverfahren versteht man im wesentlichen das Laserstrahlschweißen und das Elektronenstrahlschweißen, wobei dem Laserstrahlschweißen eine wirtschaftlich größere Bedeutung zukommt. Im weiteren wird in der Regel vom Laserstrahlschweißen die Rede sein, was jedoch nicht als Einschränkung der erfindungsgemäßen Lehre zu verstehen ist.

Beim Laserstrahlschweißen ebenso wie beim Elektronenstrahlschweißen ermöglicht die konzentrierte Energie des Strahls einen sogenannten Tiefschweißeffekt, durch den sich die Prozeßwärme gleichförmig über die gesamte Fügetiefe verteilt. Hieraus resultiert zum einen eine geringe Wärmebelastung des Bauteils. Außerdem läßt sich beim Laserstrahlschweißen eine hohe Prozeßgeschwindigkeit für die Herstellung von Schweißnähten herstellen, was für den wirtschaftlichen Einsatz von Hochleistungslasern ausschlaggebend ist. Es ist weiter bekannt, z.B. das Laserstrahlschweißen mit dem Lichtbogenschweißen zu kombinieren (vgl. Christof Maier, "Laserstrahl-Lichtbogen-Hybridschweißen von Aluminiumwerkstoffen", Shaker Verlag, Aachen, 1999). Man spricht dann von sogenannten Hybridschweißverfahren.

Weiter ist es bekannt, mit zwei neben oder hintereinander angeordneten Laserstrahlen im Tiefschweißmode von einer Seite (Doppelstrahlschweißen) oder von beiden Seiten (Simultanschweißen) zu arbeiten. Hierdurch wird die Prozeßstabilität verbessert und eine Porenreduktion gewährleistet. Auch die Fortbildung dieser und anderer Strahlschweißverfahren ist Gegenstand der vorliegenden Erfindung.

Die beim Strahlschweißen erzielbaren hohen Prozeßgeschwindigkeiten führen dazu, daß sich die Strahlschweißverfahren insbesondere zur Herstellung von großen Schweißnahtlängen eignen. Derartige große Schweißnahtlängen treten beispielsweise bei der Herstellung von sogenannten "Tailored Blanks" auf. Unter "Tailored Blanks" versteht man ebene Metallbauteile, beispielsweise Bleche, die aus verschiedenartigen, insbesondere verschieden dicken Teilen bestehen. Häufig werden diese "Tailored Blanks" dadurch hergestellt, daß die verschiedenen Teile im Stumpfstoß bzw. I-Stoß als Stumpfnaht verschweißt werden. Zur Herstellung dieser Schweißverbindung eignen sich aus den bereits genannten Gründen die Strahlschweißverfahren.

Ein weiterer Anwendungsbereich für die Strahlschweißverfahren sind die im Automobilbau zunehmend erforderlichen langen Schweißnähte zur Verbindung von stranggepreßten Hohlprofilen aus Aluminiumwerkstoffen mit anderen Karosserieteilen.

Beim Laserstrahlschweißen unterscheidet man unterschiedliche physikalische Phänomene beim Auftreffen des Laserstrahls auf den metallischen Werkstoff. Abhängig von der Strahlintensität unterscheidet man bei der Wechselwirkung zwischen Laserstrahl und Metallwerkstoff zwischen dem Wärmeleitungsmode bei eher niedrigen Laserstrahlintensitäten, dem Tiefschweißmode bei mittleren Laserstrahlintensitäten und der Plasmaabschirmung bei hohen Laserstrahlintensitäten. Beim Wärmeleitungsmode wird das Metall von der Oberfläche her aufgeschmolzen, im wesentlichen ohne daß der Laserstrahl in das Material eindringt. Im Tiefschweißmode, der zur Herstellung von Schweißnähten zwischen Metallbauteilen eingesetzt wird, nimmt die Verdampfung an der Metalloberfläche soweit zu, daß sich in dem Werkstück eine Dampfkapillare ausbildet. Durch die Dampfkapillare gelangt der Laserstrahl in das Werkstück und die Wärmeeinkopplung wird über die gesamte Fügezone verteilt. Man spricht hier auch von der sogenannten "Keyhole"-Bildung. Relativbewegungen des Laserstrahls zum Werkstück sorgt für ein Fortschreiten der Kapillare durch die Metallbauteile. Dabei schmilzt an der Schmelzfront kontinuierlich Material auf, das um die Kapillare herumgetrieben wird und an der Schmelzrückwand unter Bildung einer schmalen Naht erstarrt. Bei der Herstellung von Schweißnähten im Stumpfstoß ist es wichtig den Schweißprozeß so zu steuern, daß die Kapillare sich gerade bis zur Unterseite der Metallbauteile erstreckt, so daß ein Verschweißen über den gesamten Querschnitt gewährleistet ist.

Bei der Plasmaabschirmung ist die Laserstrahlintensität so hoch, daß der Laserstrahl in einem abschirmenden Plasma an der Metalloberfläche absorbiert wird und nur noch geringfügig in die Oberfläche des Werkstoffes eindringen kann.

In der Praxis hat sich gezeigt, daß die Schweißnahtqualität im Tiefschweißmode verbesserungswürdig ist. Sowohl an der Schweißnahtoberraupe als auch an der Schweißnahtwurzel treten unerwünschte Effekte auf. Insbesondere beim Verschweißen von Metallbauteilen aus Aluminiumwerkstoffen treten an der Schweißnahtwurzel unerwünschte Materialspitzen oder Kerben auf. Diese im wesentlichen im Bereich der Oberflächen der Schweißnahtraupe vorhandenen Effekte sind zum einen häufig optisch unerwünscht, befördern bei dynamischer Belastung die Rißbildung und führen bei den "Tailored Blanks" zu eingeschränkter Weiterverarbeitbarkeit. Eine Glättung der Schweißnahtoberraupe mit Hilf eines Schmelzstrahls ist bekannt. (siehe US-A-4 914 268; WO-A-99/06173; JP-A-54071059; US-A-5 705 788).

Ausgehend von dem zuvor beschriebenen Stand der Technik liegt der vorliegenden Erfindung die Aufgabe zugrunde, ein Verfahren bzw. eine Vorrichtung zur Schweißnahtglättung beim Strahlschweißen zur Verfügung zu stellen, mit dem eine sehr gute Glättung der Schweißnahtwurzel gewährleistet wird.

Gemäß einer ersten Lehre der Erfindung ist die zuvor hergeleitete und aufgezeigte Aufgabe für ein Verfahren zur Schweißnahtglättung beim Strahlschweißen dadurch gelöst, daß die Schweißnahtwurzel mit Hilfe eines Schmelzstrahls im Wärmeleitungsmode geglättet wird. Es hat sich gezeigt, daß das Aufschmelzen der Schweißnahtwurzel bzw. der Schweißnahtoberraupe an ihrer Oberfläche im Wärmeleitungsmode eine sehr gute Schweißnahtglättung gewährleistet. Als besonders vorteilhaft hat sich die Verwendung des erfindungsgemäßen Verfahrens beim Schweißen von Aluminiumwerkstoffen bewährt. Darüber hinaus werden die erfindungsgemäßen Vorteile auch bei anderen Metallwerkstoffen verwirklicht.

Um ein Aufschmelzen der Oberfläche von Aluminiumwerkstoffen im Wärmeleitungsmode derart zu gewährleisten, daß die erfindungsgemäß optimierte Schweißnahtglättung gewährleistet ist, wird die Strahlintensität des Schmelzstrahls auf etwa 5 . 10³ bis 1 · 10⁶ W/cm², insbesondere 1 · 10⁴ bis 6 · 10⁵ W/cm², eingestellt wird.

Dadurch, daß die Breite des Strahlflecks des Schmelzstrahls im wesentlichen auf die Schweißnahtbreite eingestellt wird, wird das Aufschmelzen des Metallwerkstoffes in dem kritischen Bereich und damit die gewünschte Schweißnahtglättung gewährleistet. Unter dem Strahlfleck ist die Abbildung des Strahls auf der Materialoberfläche der zu verschweißenden Bauteile zu verstehen.

Zur Gewährleistung hoher Prozeßgeschwindigkeiten wird die Länge des Strahlflecks des Schmelzstrahls auf einen Wert mindestens doppelt so groß wie die Breite des Strahlflecks des Schmelzstrahls eingestellt. Hierdurch wird auch bei hohen Prozeßgeschwindigkeiten auf Grund der längeren Einwirkung des Schmelzstrahls an einem Punkt der Schweißnaht ein hinreichend hoher Energieeintrag in die Schweißnahtoberfächen gewährleistet, der für das gewünschte Aufschmelzen und Glätten der Schweißnahtoberfläche sorgt.

Grundsätzlich ist es möglich, den Strahlfleck des Schmelzstrahls außerhalb des Strahlflecks des Schweißstrahls, nämlich in Schweißrichtung hinter dem Strahlfleck des Schweißstrahls anzuordnen, oder eine Überlappung zwischen dem kleinen Strahlfleck des Schweißstrahls und dem größeren Strahlfleck des Schmelzstrahls einzustellen. Im ersteren Fall liegt es nahe, den Abstand zwischen dem Strahlfleck des Schweißstrahls und dem Strahlfleck des Schmelzstrahls nicht zu groß zu wählen, damit vom Schmelzstrahl noch die Schweißwärme des Schweißstrahls genutzt werden kann, wodurch beispielsweise der Spielraum für eine Erhöhung der Prozeßgeschwindigkeit größer wird. Es hat sich jedoch als vorteilhaft herausgestellt, den Strahlfleck des Schweißstrahls und des Strahlflecks des Schmelzstrahls überlappend anzuordnen und zwar vorzugsweise derart, daß die Position des Strahlflecks des Schmelzstrahls in Schweißrichtung zumindest überwiegend hinter dem Strahlfleck des Schweißstrahls liegend eingestellt wird. Hierdurch wird die Werkstoffoberfläche bereits vor dem Verschweißen über die gesamte Schweißnahtbreite aufgeschmolzen bzw. vorgewärmt und nach dem Verschweißen über die gesamte Schweißnahtbreite in geschmolzenem Zustand gehalten und dadurch geglättet. Denkbar ist auch eine völlige zeitliche Trennung zwischen der Herstellung der Schweißnaht im Tiefschweißmode und der Glättung der Schweißnaht im Wärmeleitungsmode. Ein solcher "Off-line"-Betrieb bietet sich beispielsweise bei der Herstellung von nicht linearen Schweißnähten an, bei denen der apparative Aufwand dadurch reduziert werden kann, daß nach Herstellung der Schweißnaht das verschweißte Werkstück gewendet werden kann und anschließend die Schweißnahtwurzel mit Hilfe eines Schmelzstrahls im Wärmeleitungsmode geglättet wird. In einem solchen Fall muß der fehlende Energieeintrag durch den Schweißstrahl in der Regel durch eine geringere Prozeßgeschwindigkeit kompensiert werden.

Gemäß einer zweiten Lehre der Erfindung ist die oben hergeleitete und aufgezeigte Aufgabe für eine Vorrichtung zur Schweißnahtglättung beim Strahlschweißen mit einem eine Schweißnaht im Tiefschweißmode herstellenden Schweißstrahlgenerator durch die Merkmale des Anspruchs 6 gelöst.

Als Schweißstrahlgenerator zum Einsatz in einer Vorrichtung gemäß der zweiten Lehre der Erfindung eignen sich fokussierte Nd:YAG- bzw. CO₂-Laser. Die Verwendung derartiger Laser als Schweißstrahlgenerator ist aus dem Stand der Technik bekannt.

Eine bevorzugte Ausgestaltung erfährt die erfindungsgemäße Vorrichtung dadurch, daß der Schmelzstrahlgenerator als Diodenlaser ausgebildet ist. Ein Diodenlaser erfüllt im Hinblick auf die Strahlfleckgröße und die geforderten Laserstrahlintensitäten ohne weiteres die Anforderungen an einen erfindungsgemäßen Schmelzstrahlgenerator.

Alternativ zur Verwendung eines Diodenlasers ist es auch möglich, den Schmelzstrahlgenerator als Nd:YAG- oder CO₂-Laser auszubilden. Dabei muß durch verschiedene Maßnahmen sichergestellt werden, daß die erforderlichen Strahlintensitäten eingehalten werden. Unter Umständen ist es möglich, den Schmelzstrahl über ein Strahlteiler aus dem Schweißstrahl abzuteilen und über eine Defokussierungsoptik in der gewünschten Laserstrahlintensität auf die Materialoberfläche zu projizieren. Auch die Verwendung baugleicher Laser für Schweiß- und Schmelzstrahl bringt Vorteile mit sich.

Die Vorrichtung gemäß der zweiten Lehre der Erfindung ist derart aufgebaut, daß auf einer Seite des Werkstücks ein Schweißlaserstrahlgenerator und auf der anderen Seite des Werkstücks zur Schweißnahtwurzelglättung z.B. ein Diodenlaser angeordnet ist. So ist es notwendig, dafür zu sorgen, daß die Strahlung der einzelnen Laser nicht in den jeweils anderen Laser einkoppelt, um Beschädigungen der Laser zu vermeiden. Eine solche Einkopplung wird beispielsweise über die Wahl geeigneter Winkel zwischen den optischen Achsen der Laser weitgehend vermieden. Bei den bei der Vorrichtung gemäß der zweiten Lehre der Erfindung vorzugsweise unterschiedlichen Lasern, die Laserlicht unterschiedlicher Wellenlängen aussenden, läßt sich eine Strahleinkopplung unabhängig von der Anordnung der optischen Achse auch dadurch vermeiden, daß die als Laser ausgebildeten Schweiß- und/oder Schmelzstrahlgeneratoren einen auf der Strahlachse angeordneten, an die Lichtwellenlänge angepaßten dichroitischen Spiegel aufweisen. Ein solcher dichroitischer Spiegel ermöglicht die Ausblendung der unerwünschten Strahlung des jeweils anderen Lasers von der optischen Achse der Laser. Dieser Ausgestaltung der zweiten Lehre der Erfindung kommt auch unabhängig von der zweiten Lehre der Erfindung eigenständige Bedeutung zu. So läßt sich beispielsweise mit den beschriebenen dichroitischen Spiegeln die Anordnung zweier einander gegenüberliegender Schweißstrahllaser auch auf einer gemeinsamen optischen Achse verwirklichen, solange die Schweißstrahllaser Licht unterschiedlicher Wellenlänge aussenden, wie dies beispielsweise für ND:YAG-Laser und CO₂-Laser der Fall ist.

Insbesondere Diodenlaser haben teilweise die Eigenschaft, daß die volle Strahlleistung erst einige Zeit nach dem Einschalten des Diodenlasers zur Verfügung steht. Um ein "Vorwärmen" des Schmelzstrahllasers nach dem Einbringen des Werkstücks in den Strahlengang zu vermeiden und die Arbeitssicherheit zu gewährleisten, ist es vorteilhaft, auf der optischen Achse des Schmelzstrahllasers auf der dem Schmelzstrahllaser abgewandten Seite der Werkstückaufnahme einen Absorber für das Schmelzstrahllaserlicht anzuordnen. Hierdurch wird gewährleistet, daß insbesondere Diodenlaser bereits vor der Einführung des Werkstückes in den Strahlengang eingeschaltet werden kann, ohne daß die Arbeitssicherheit beeinträchtigt wird.

Es ist bereits erwähnt worden, daß zur Prozeßsteuerung beim Betrieb einer Laserstrahlquelle im Tiefschweißmode gewährleistet werden muß, daß die Kapillare möglichst durchgehend die dem Laser abgewandte Oberfläche des Werkstückes erreicht. Um eine entsprechende Prozeßsteuerung zu ermöglichen, ist es bekannt, auf der dem Schweißstrahllaser abgewandten Seite einen Schweißstrahldetektor anzuordnen, mit dessen Hilfe die Öffnung der Kapillare detektiert werden kann. Bei der erfindungsgemäßen Verwendung eines Schmelzstrahlgenerators ist es alternativ oder kumulativ möglich, auf der dem Schmelzstrahlgenerator abgewandten Seite der Werkstückaufnahme einen Schmelzstrahldetektor anzuordnen, dessen Ausgangssignal zur Prozeßsteuerung verwendet werden kann. In dem Fall, in dem sich der Strahlfleck des Schmelzstrahlgenerators mit dem Strahlfleck des Schweißstrahlgenerators überlappt, läßt sich mit dem Schmelzstrahldetektor ebenfalls die Öffnung der Kapillare an der Unterseite des Werkstückes beobachten. Überlappen sich der Strahlfleck des Schmelzstrahlgenerators und des Schweißstrahlgenerators nicht, so lassen sich mit dem Schmelzstrahldetektor evtl. Fehler in der Schweißnaht detektieren.

Es existieren eine Vielzahl von Möglichkeiten, das erfindungsgemäße Verfahren bzw. die erfindungsgemäße Vorrichtung zur Schweißnahtglättung beim Strahlschweißen auszugestalten und weiterzubilden. Hierzu wird beispielsweise einerseits verwiesen auf die den Patentansprüchen 1 und 6 nachgeordneten Patentansprüche andererseits auf die Beschreibung von bevorzugten Ausführungsbeispielen in Verbindung mit der Zeichnung.

In der Zeichnung zeigt
- Fig. 1: schematisch ein erstes Ausführungsbeispiel einer Vorrichtung gemäß der zweiten Lehre der Erfindung aus der Schweißrichtung,
- Fig. 2: die relative Anordnung der Strahlflecken eines Schweißstrahllasers und eines Schmelzstrahllasers zueinander,
- Fig. 3: schematisch einen Längsschnitt durch die Schweißnaht in der Prozeßzone,
- Fig. 4a) und 4b): zwei weitere Ausführungsbeispiele für die relative Anordnung der Strahlflecken eines Schweißstrahllasers und eines Schmelzstrahllasers zueinander,
- Fig. 5a) und 5b): schematisch ein zweites und ein drittes Ausführungsbeispiel einer Vorrichtung zur Schweißnahtglättung gemäß der zweiten Lehre der Erfindung aus der Schweißrichtung und
- Fig. 6a) und 6b): schematisch ein viertes und ein fünftes Ausführungsbeispiel einer Vorrichtung zur Schweißnahtglättung gemäß der zweiten Lehre der Erfindung aus der Schweißrichtung.

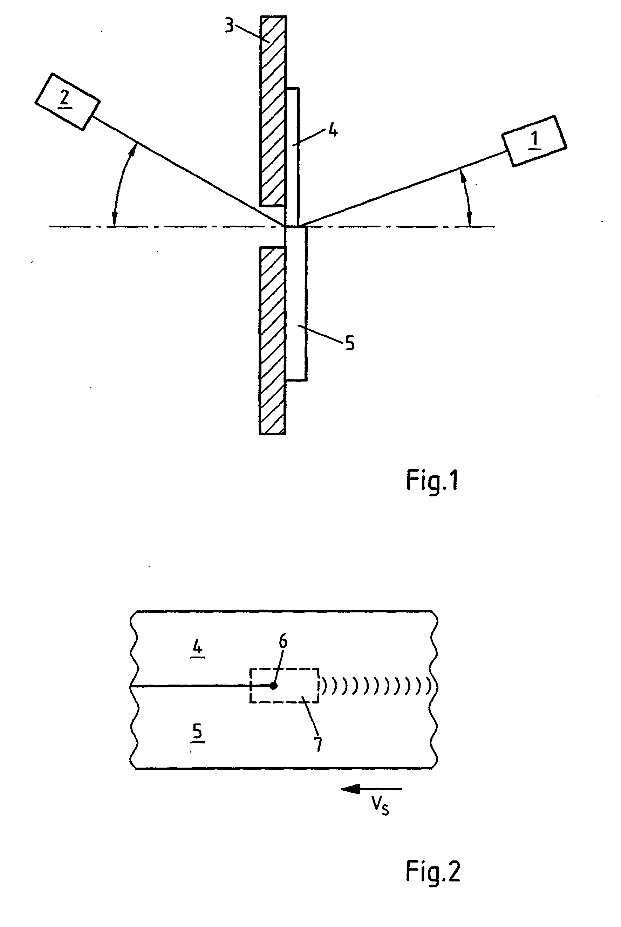

Das in Fig. 1 der Zeichnung dargestellte erste Ausführungsbeispiel einer Vorrichtung zur Schweißnahtglättung beim Strahlschweißen gemäß der zweiten Lehre der Erfindung weist einen eine Schweißnaht im Tiefschweißmode herstellenden Schweißstrahllaser 1, hier einen Nd:YAG-Laser, und zur erfindungsgemäßen Glättung der Schweißnahtwurzel einen im Wärmeleitungsmode eine Schweißnahtglättung bewirkenden Schmelzstrahllaser 2, hier ein Diodenlaser, auf. Zwischen dem Schweißstrahllaser 1 und dem Schmelzstrahllaser 2 ist eine Werkstückaufnahme 3, hier eine Führung, angeordnet, entlang derer zwei Bleche 4, 5 unterschiedlicher Dicke, hier bestehend aus einem Aluminiumwerkstoff, mit einer Prozeßgeschwindigkeit von etwa beispielsweise 6 m/min geführt werden. Die optischen Achsen des Schweißstrahllasers 1 und des Schmelzstrahllasers 2 schließen mit der Stoßebene der Bleche 4, 5 unterschiedliche Winkel ein, um eine Abbildung des Laserlichts des gegenüberliegenden Lasers in die Optik des anderen Lasers weitgehend zu vermeiden.

In Fig. 2 ist eine Ansicht der Bleche 4, 5 aus dem in Fig. 1 dargestellten Ausführungsbeispiel auf die Schweißnahtwurzel dargestellt. Die Schweißrichtung Vₛ ist durch einen Pfeil angedeutet. Bei dem dargestellten Ausführungsbeispiel ist der Strahlfleck 6 des Schweißstrahllasers innerhalb des deutlich größeren, im wesentlichen rechteckigen Strahlfleck 7 des Schmelzstrahllasers angeordnet. Der Strahlfleck 6 des Schweißstrahllasers 1 liegt in Schweißrichtung gesehen etwa an dem Übergang zwischen dem ersten Drittel des Strahlflecks 6 des Schmelzstrahllasers und dem zweiten Drittel des Strahlflecks 6. Hierdurch wird der Bereich der Schweißnahtwurzel vor dem Tiefverschweißen an der Oberfläche vorgewärmt und nach dem Tiefverschweißen im Strahlfleck 6 des Schweißstrahllasers durch die beiden im Bezug auf die Schweißrichtung hinteren Drittel des Strahlflecks 7 des Schmelzstrahllasers nachgewärmt und geglättet. Der Durchmesser des Strahlflecks 6 des Schweißstrahllasers liegt dabei etwa im Bereich zwischen 0,2 bis 0,8 mm während der Strahlfleck 7 des Schmelzstrahllasers 2 in Schweißrichtung etwa 6 bis 8 mm lang und 2 bis 4 mm breit ist.

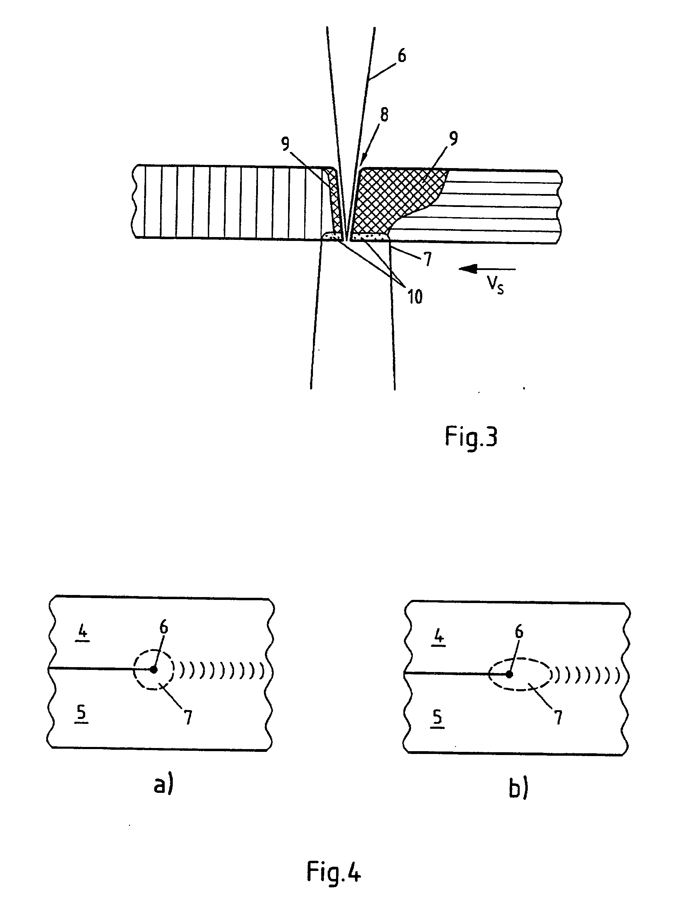

Aus dem in Fig. 3 dargestellten Längsschnitt durch die Schweißnaht wird die Anordnung der Bereiche, in denen sich im Strahlfleck 6 des Schweißstrahllasers eine Dampfkapillare 8 mit umgebender Schmelze 9 relativ zu der im Strahlfleck 7 des Schmelzstrahllasers 2 Glättungsschmelze 10 deutlich. Durch eine entsprechende Schraffur ist angedeutet, daß der Werkstoff in Schweißrichtung vor dem Strahlfleck 6 des Schweißstrahllasers nicht aufgeschmolzen ist, während der Werkstoff im Bereich in Schweißrichtung hinter dem Strahlfleck 6 des Schweißstrahllasers umgeschmolzen wurde. Aus Fig. 3 ist auch ersichtlich, daß bei dem dargestellten Ausführungsbeispiel durch das in Fig. 2 dargestellte Voreilen des Strahlflecks 7 des Schmelzstrahllasers der Bereich um die spätere Schweißnahtwurzel bereits vor dem Strahlfleck 6 des Schweißstrahllasers aufschmilzt.

In den dargestellten Ausführungsbeispielen ist stets die Glättung der Schweißnahtwurzel über einen Schmelzstrahllaser dargestellt. Diese Glättung der Schweißnahtwurzel spielt insbesondere beim Strahlschweißen von Aluminiumwerkstoffen eine wichtige Rolle, da vor allem bei naturharten Aluminium-Legierungen häufig Kerben und Spitzen an der Schweißnahtwurzel auftreten. Eine Glättung der Schweißnahtoberraupe wird im Bedarfsfalle durch einen auf der entsprechenden Seite der Werkstücke angeordneten Schmelzstrahllaser gewährleistet.

In Fig. 4a) und b) ist der Strahlfleck 6 des Schweißstrahllasers und der Strahlfleck 7 des Schmelzstrahllasers für die Fälle dargestellt, in denen a) der Schmelzlaserstrahl durch einen Strahl eines Nd:YAG- oder CO₂-Lasers ausserhalb des Focus gebildet wird oder b) der Schmelzlaserstrahl durch einen mit einer nicht dargestellten Zylinderlinse geformten, elliptischen Strahl derartiger Laser gebildet wird. Einen elliptischen Strahl kann auch durch Verkippen des Strahls, die Ausnutzung von Astigmatismus oder dergleichen erzeugt werden. Durch die beschriebenen Maßnahmen wird die gewünschte Strahlintensität eingestellt.

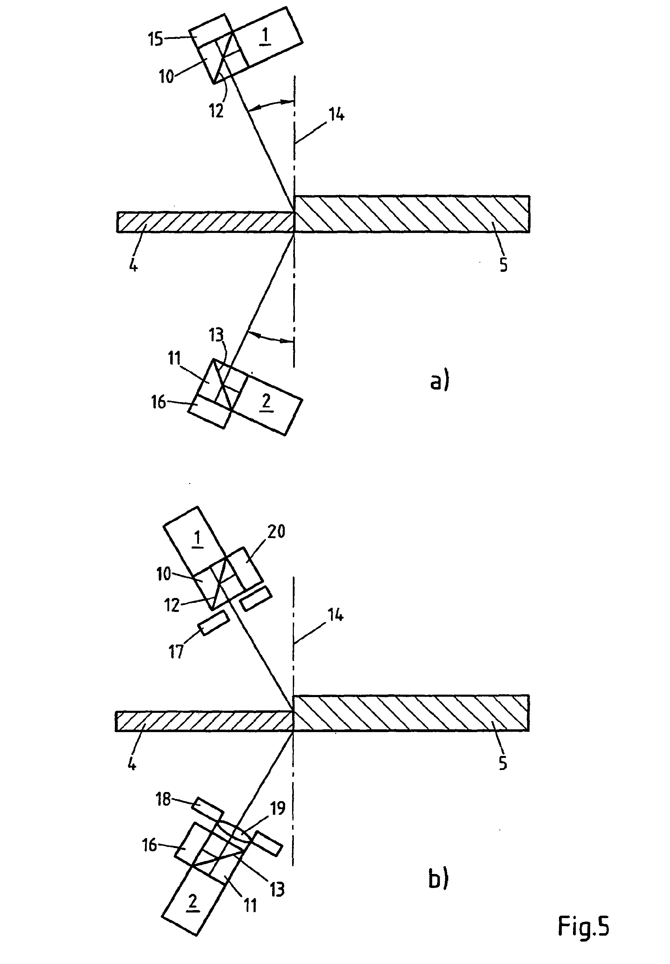

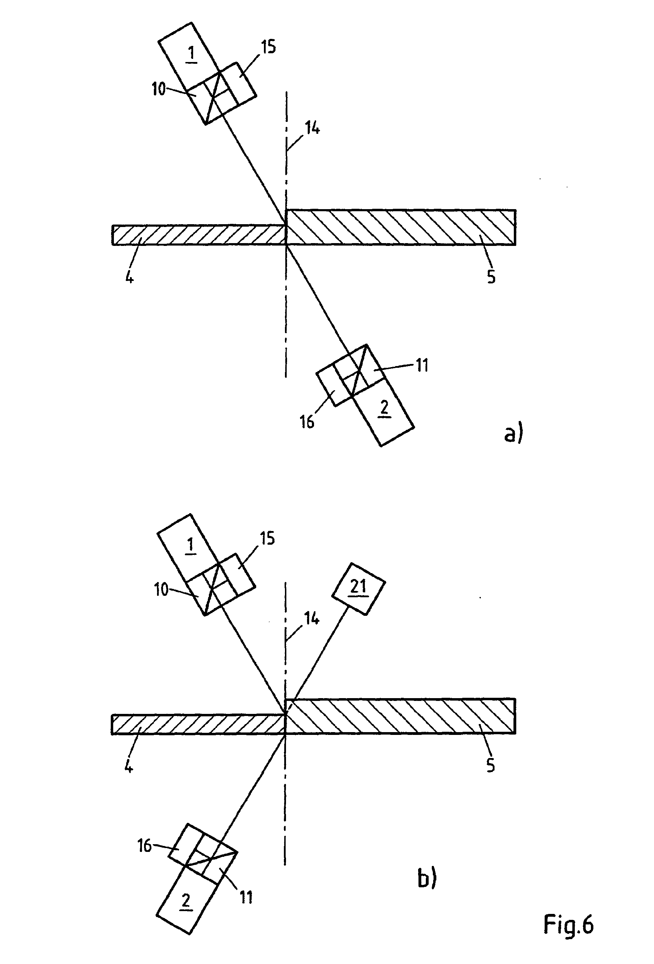

Bei den in den Fig. 5 und 6 dargestellten weiteren Ausführungsbeispielen einer Vorrichtung gemäß der zweiten Lehre der Erfindung werden für übereinstimmende Bauteile dieselben Bezugszeichen verwendet, wie für das in Fig. 1 dargestellte Ausführungsbeispiel.

Bei dem in Fig. 5a) dargestellten Ausführungsbeispiel sind auf den optischen Achsen des Schweißstrahllasers 1 und des Schmelzstrahllasers 2 jeweils ein dichroitischer Spiegel 10, 11 angeordnet. Bei der in Fig. 5a) dargestellten Anordnung sind die selektiven Reflektionsschichten 12, 13 derart ausgestaltet, daß sie eine Totalreflektion des unmittelbar vom Laser 1, 2 in die dichroitischen Spiegel 10, 11 eingestrahlten Lichts gewährleisten und auf der optischen Achse des so reflektierten Laserlichts einfallendes Laserlicht abweichender Wellenlänge des gegenüberliegenden Lasers 2, 1 unreflektiert durchlassen. Hierdurch ist es beispielsweise möglich, den Schweißstrahllaser 1 und den Schmelzstrahllaser 2 in übereinstimmenden Winkel zur strichpunktierten Schweißnahtebene 14 im gleichen Winkel anzuordnen, ohne eine Zerstörung der Laser zu riskieren. Insbesondere aus Arbeitsschutzgründen ist eine solche Anordnung sinnvoll, da der größte Teil des die Bleche 4, 5 durchdringenden Laserlichts gezielt über Absorber 15, 16 abgefangen werden kann.

Das in Fig. 5b) dargestellte dritte Ausführungsbeispiel einer Vorrichtung gemäß der zweiten Lehre der Erfindung unterscheidet sich von dem in Fig. 5a) dargestellten zweiten Ausführungsbeispiel zunächst dadurch, daß die selektiven Schichten 12, 13 für die Laserstrahlung der ihnen direkt zugeordneten Laser 1, 2 durchlässig sind und die Laserstrahlung der gegenüberliegenden Laser 2, 1 reflektieren. Entsprechend sind der Schweißstrahllaser 1 und der Schmelzstrahllaser 2 in einer Linie auf der optischen Achse des Schweißstrahls bzw. des Schmelzstrahls angeordnet. Die Aperturen des Schweißstrahllasers 1 und des Schmelzstrahllasers 2 werden durch Blenden 17, 18 umgeben, durch die eine Beschädigung beispielsweise der Anschlußelemente der Laser 1, 2 verhindert wird. In Fig. 5b) ist darüber hinaus eine Optik 19 des Schmelzstrahllasers 2 angedeutet.

Bei dem in Fig. 5b) dargestellten dritten Ausführungsbeispiel wird die in den dichroitischen Spiegel 11 einfallende Strahlung des Schweißlichtlasers 1 in einen Absorber 16 reflektiert, wie dies bereits in Fig. 5a) analog dargestellt ist. Das in den dichroitischen Spiegel 10 vor dem Schweißstrahllaser 1 einfallende Laserlicht des Schmelzstrahllasers 2 wird abweichend zu dem in Fig. 5a) dargestellten zweiten Ausführungsbeispiel nicht in einen reinen Absorber, sondern einen Schmelzstrahllaserlichtdetektor und Absorber 20 geleitet, dessen Ausgangssignal zur Prozeßsteuerung verwendet wird.

Bei dem in Fig. 6a) dargestellten vierten Ausführungsbeispiel einer Vorrichtung gemäß der zweiten Lehre der Erfindung sind die optischen Achsen des Schweißstrahllasers 1 und des Schmelzstrahllasers 2 übereinstimmend gewählt worden. Dies dient dazu, daß der als Diodenlaser ausgebildete Schmelzstrahllaser 2 bereits vor dem Eintreten der Bleche 4, 5 in den Bearbeitungsbereich eingeschaltet werden kann, ohne die Arbeitssicherheit zu gefährden, um eine Stabilisierung des Schmelzstrahllasers 2 vor dem dem Schweißbeginn zu gewährleisten.

Bei dem in Fig. 6b) dargestellten fünften Ausführungsbeispiel wird die Absorption des Schmelzlaserstrahls durch einen zusätzlichen Absorber 21 gewährleistet, der nur solange benötigt wird, solange keine Bearbeitung von Blechen 4, 5 erfolgt.

## Patentansprüche

1. Verfahren zur Schwcißnahtglättung beim Strahlschweißen, bei welchem eine Schweißnaht zwischen zwei Metallbauteilen zumindest mit Hilfe eines Schweißstrahls im Tiefschweißmode hergestellt wird,
**dadurch gekennzeichnet, daß**
der Schweißstrahl im Tiefschweißmode von einer Seite der Metallbauteile her eingekoppelt wird und zumindest die Schweißnahtwurzel auf der der Schweißsutrahleinkopplung gegenüberliegenden Seite der Metallbauteile mit Hilfe eines Schmelzstrahls im Wärmeleitungsmode geglättet wird.

2. Verfahren nach Anspruch 1,
**dadurch gekennzeichnet, daß**
die Strahlintensität des Schmelzstrahls auf 5 · 10³ bis 1 · 10⁶ W/cm², insbesondere 1 · 10⁴ bis 6 ·10⁵ W/cm², eingestellt wird.

3. Verfahren nach Anspruch 1 oder 2,
**dadurch gekennzeichnet, daß**
die Breite des Strahlflocks des Schmelzstrahls im wesentlichen auf die Schweißnahtbreite eingestellt wird.

4. Verfahren nach einem der Ansprüche 1 bis 3,
**dadurch gekennzeichnet, daß**
die Länge des Strahlflecks des Schmelzstrahls auf einen Wert mindestens doppelt so groß wie die Breite des Strahlflecks des Schmelzstrahls eingestellt wird.

5. Verfahren nach einem der Ansprüche 1 bis 4,
**dadurch gekennzeichnet, daß**
die Position des Strahlflecks des Schmelzstrahls in Schweißrichtung zumindest überwiegend hinter dem Strahlfleck des Schweißstrahls liegend eingestellt wird.

6. Vorrichtung zur Schweißnahtglättung beim Strahlschweißen mit einem eine Schweißnaht im Tiefschweißmode herstellenden Schweißstrahlgenerator
(1) zur Verwirklichung eines Verfahren nach einem der Ansprüche 1 bis 5,
**dadurch gekennzeichnet, daß** zur Glättung der Schweißnahtwurzel ein im Wärmeleitungsmode eine Schweißnahtglättung bewirkender Schmelzstrahlgenerator (2) vorgesehen ist,
wobei der Schweißstrahlgenerator (1) und der Schmelzstrahlgenerator (2) derart angeordnet sind, daß, wenn der Schweißstrahlgenerator auf einer Seite der Metallbauteile angeordnet ist und dessen Schweißstrahl im Tiefschweißmode von einer Seite der Metallbauteile her eingekoppelt wird, der Schmelzstrahlgenerator (2) auf der der Einkopplung des Schweißstrahls im Tiefschweißmode gegenüberliegenden Seite der Metallbauteile arbeitet.

7. Vorrichtung nach Anspruch 6,
**dadurch gekennzeichnet, daß**
der Schmelzstrahlgenerator (2) als Diodenlaser ausgebildet ist.

8. Vorrichtung nach Anspruch 6,
**dadurch gekennzeichnet, daß**
der Schmelzstrahlgenerator (2) als Nd: YAG- oder CO₂-Laser ausgebildet ist.

9. Vorrichtung nach einem der Ansprüche 6 bis 8,
**dadurch gekennzeichnet, daß**
die als Laser ausgebildeten Schweiß- und/oder Schmelzstrahlgeneratoren (1, 2) einen auf der Strahlachse angeordneten, an die Lichtwellenlänge angepaßten dichroitischen Spiegel (10, 11) aufweisen.

10. Vorrichtung nach einem der Ansprüche 6 bis 9,
**dadurch gekennzeichnet, daß**
auf der optischen Achse des Schmelzstrahllasers (2) auf der dem Schmelzstrahllaser (2) abgewandten Seite der Werkstückaufnahme (3) ein Absorber (15, 21) für das Schmelzstrahllaserlicht angeordnet ist.

11. Vorrichtung nach einem der Ansprüche 6 bis 10,
**dadurch gekennzeichnet, daß**
auf der dem Schmelzstrahlgenerator (2) abgewandten Seite der Werkstückaufnahme (3) ein Schmelzstrahldetektor (20) angeordnet ist.

## Claims

1. A method for smoothing welds during beam welding, wherein a weld between two metal components is produced at least with one welding beam in deep-welding mode,
**characterised in that** the welding beam in deep-welding mode is launched from one side of the metal components and at least the weld root on the side of the metal components opposite the side from which the welding beam is launched is smoothed by means of a melting beam in thermal conduction mode.

2. A method according to claim 1
**characterised in that** the beam intensity of the melting beam is set to from 5 x 10³ to 1 x 10⁶ W/cm² and in particular from 1 x 10⁴ to 6 x 10³ W/cm².

3. A method according to claim 1 or 2
**characterised in that** the width of the beam spot of the melting beam is set to substantially the width of the weld.

4. A method according to one of claims 1 to 3
**characterised in that** the length of the beam spot of the melting beam is set to a value that is at least twice the width of the beam spot of the melting beam.

5. A method according to one of claims 1 to 4
**characterised in that** the beam spot of the melting beam is positioned in the direction of welding such that at least its larger part lies behind the beam spot of the welding beam.

6. An apparatus for smoothing welds during beam welding with a welding beam generator (1) producing a weld in deep-welding mode for carrying out a method according to one of claims 1 to 5,
**characterised in that** a melting beam generator (2) causing weld root smoothing in the thermal-conduction mode is provided for smoothing the weld root, the welding beam generator (1) and the melting beam generator (2) being so arranged that when the welding beam generator is arranged on one side of the metal components and its welding beam in deep-welding mode is launched from one side of the metal components, the melting beam generator (2) operates on the side of the metal components opposite the side on which the welding beam in deep-welding mode is launched.

7. An apparatus according to claim 6
**characterised in that** the melting beam generator (2) is a diode laser.

8. An apparatus according to claim 6
**characterised in that** the melting beam generator (2) is a Nd:YAG or CO₂ laser.

9. An apparatus according to one of claims 6 to 8
**characterised in that** the welding and/or melting beam generators (1, 2), which are in the form of lasers, comprise a dichroic mirror (10, 11) arranged on the beam axis and conforming to the light wavelength.

10. An apparatus according to one of claims 6 to 9
**characterised in that** an absorber (15, 21) for the melting beam laser light is arranged on the optical axis of the melting beam laser (2) on the side of the workpiece holder (3) that is averted from the melting beam laser (2).

11. An apparatus according to one of claims 6 to 10
**characterised in that** a melting beam detector (20) is arranged on the side of the workpiece holder (3) that is averted from the melting beam generator (2).

## Revendications

1. Procédé de lissage du cordon de soudure en soudage par faisceau, dans lequel un cordon de soudure est formé entre deux composants métalliques au moins à l'aide d'un faisceau de soudage en mode de soudage profond,
**caractérisé en ce que**
le faisceau de soudage en mode de soudage profond est injecté par un côté des composants métalliques et au moins la racine du cordon de soudure sur le côté des composants métalliques opposé à l'injection du faisceau de soudage est lissé à l'aide d'un faisceau de fusion qui travaille en mode de conduction de chaleur.

2. Procédé selon la revendication 1, **caractérisé en ce que** l'intensité du faisceau de fusion est réglée entre 5.10³ et 1.10⁶ W/cm² et en particulier entre 1.10⁴ et 6.10⁵ W/cm².

3. Procédé selon les revendications 1 ou 2, **caractérisé en ce que** la largeur de la tache du faisceau de fusion est ajustée essentiellement sur la largeur du cordon de soudure.

4. Procédé selon l'une des revendications 1 à 3, **caractérisé en ce que** la longueur de la tache du faisceau de fusion est ajustée à une valeur qui représente au moins le double de la largeur de la tache du faisceau de fusion.

5. Procédé selon l'une des revendications 1 à 4, **caractérisé en ce que** la position de la tache du faisceau de fusion dans la direction de soudage est réglée au moins de manière prédominante en arrière de la tache du faisceau de soudage.

6. Dispositif de lissage du cordon de soudure en soudage par faisceau à l'aide d'un générateur (1) de faisceau de soudage qui forme un cordon de soudure en mode de soudage profond, en vue de la mise en oeuvre d'un procédé selon l'une des revendications 1 à 5,
**caractérisé en ce que**
pour lisser la racine du cordon de soudure, il présente un générateur (2) de faisceau de fusion qui effectue le lissage du cordon de soudure en mode de conduction de chaleur, le générateur (1) de faisceau de soudage et le générateur (2) de faisceau de fusion étant disposés de telle sorte que lorsque le générateur de faisceau de soudage est disposé sur un côté des composants métalliques et son faisceau de soudage est injecté en mode de soudage profond par un côté des composants métalliques, le générateur (2) de faisceau de fusion travaille sur le côté des composants métalliques opposé à l'injection du faisceau de soudage en mode de soudage profond.

7. Dispositif selon la revendication 6, **caractérisé en ce que** le générateur (2) de faisceau de fusion est configuré comme laser à diode.

8. Dispositif selon la revendication 6, **caractérisé en ce que** le générateur (2) de faisceau de fusion est configuré comme laser à Nd : YAG ou à CO₂.

9. Dispositif selon l'une des revendications 6 à 8, **caractérisé en ce que** les générateurs (1, 2) de faisceau de soudage et/ou de faisceau de fusion configurés comme lasers présentent un miroir dichroïque (10, 11) disposé sur l'axe du faisceau et adapté à la longueur d'onde de la lumière.

10. Dispositif selon l'une des revendications 6 à 9, **caractérisé en ce qu'**un absorbeur (15, 21) de la lumière du laser à faisceau de fusion est disposé sur l'axe optique du laser (2) à faisceau de fusion sur le côté du logement de pièce (3) non tourné vers le laser (2) à faisceau de fusion.

11. Dispositif selon l'une des revendications 6 à 10, **caractérisé en ce qu'**un détecteur (20) de faisceau de fusion est disposé sur le côté du logement (3) de pièce non tourné vers le générateur (2) de faisceau de fusion.
